Europäisches Patentamt

European Patent Office

Office européen des brevets

(19)

(11) Veröffentlichungsnummer : **0 214 950**
**B1**

(12) **EUROPÄISCHE PATENTSCHRIFT**

(45) Veröffentlichungstag der Patentschrift :
02.11.89

(51) Int. Cl.⁴ : **A 61 C 13/24**

(21) Anmeldenummer : 86890206.5

(22) Anmeldetag : 11.07.86

(54) Verfahren zur Verbesserung des Passsitzes von Zahnprothesen sowie nach diesem Verfahren hergestellte Prothese.

(30) Priorität : 17.07.85 AT 2128/85

(43) Veröffentlichungstag der Anmeldung :
18.03.87 Patentblatt 87/12

(45) Bekanntmachung des Hinweises auf die Patenterteilung : 02.11.89 Patentblatt 89/44

(84) Benannte Vertragsstaaten :
AT BE CH DE FR GB IT LI LU NL SE

(56) Entgegenhaltungen :
US—A— 2 574 180
US—A— 3 339 283

(73) Patentinhaber : **Prohaska, Wolfram Dr.**
**Dr.Hussa-Weg 1**
**A-9620 Hermagor (AT)**

(72) Erfinder : **Prohaska, Wolfram Dr.**
**Dr.Hussa-Weg 1**
**A-9620 Hermagor (AT)**

(74) Vertreter : **Gibler, Ferdinand, Dipl.Ing.Dr.tech.**
**Dorotheergasse 7/14**
**A-1010 Wien (AT)**

## Beschreibung

Die Erfindung betrifft ein Verfahren zur Herstellung einer schleimhautgetragenen, nach einer Abformung von Kieferteilen angefertigten Zahnprothese mit verbessertem Paßsitz, wobei der dem Kiefer zugewandte Bereich der Prothese mit einem der Dicke einer Unterfütterung aus verformbarem Kunststoffmaterial entsprechenden Mindermaß gegenüber den zugehörigen abgeformten Kieferabmessungen angefertigt wird, welches Mindermaß z. B. bei der Herstellung der Prothese durch bereichsweises Auflegen einer das Gipsmodell temporär bedeckenden Auflage hergestellt wird.

Bei vorbekannten Verfahren dieser Gattung erfolgt das Unterfüttern der gesamten Auflagefläche der Prothese entweder mit Kautschuk oder einem kautschukähnlichen Material, z. B. gemäß der DE-PS 879 898 und der DE-OS 1 900 698, oder mit einem Kunststoffmaterial, z. B. gemäß der AT-PS 320 838, AT-PS 248 018 bzw. der DE-OS 29 01 661. Nach diesen bekannten Verfahren hergestellte Prothesen liegen zwar gleichmäßig auf dem gesamten Gaumenkiefer auf, jedoch bedingt der Kaumechanismus und der Bau des Kieferknochens, daß es bevorzugte Auflagestellen der Prothese am Kieferknochen beim Kauen gibt. Die Prothese sitzt zwar gleichmäßig am Gaumen, belastet jedoch beim Kauen selbst nur an diesen bevorzugten Auflagestellen den Kieferknochen, an den übrigen Stellen aber nicht. Dieser Auflagemechanismus führt bei diesen bekannten Prothesen im Lauf der Zeit zu einem Schwinden des Kieferknochens.

Ferner ist aus der US-A-2 574 180 ein Verfahren bekannt, demzufolge ein zwischen der Prothese und einer abdeckenden Folie gebildeter Raum über ein an der Gaumenseite dieser Prothese befindliches Ventil mit einem Gas oder einer Flüssigkeit gefüllt werden soll. Die Füllung dieses Raumes kann jedoch nur außerhalb des Kiefers erfolgen und es ist deshalb von vornherein nicht möglich, die erforderliche Gas- oder Flüssigkeitsmenge optimal zu bemessen. Die vorbekannte Prothese weist auch kein Mindermaß auf, so daß für das beim Zubeißen verdrängte Füllmaterial kein Raum zur Verfügung steht.

Aufgabe der Erfindung ist es, diesen Mängeln vorbekannter Prothesen abzuhelfen und eine Prothese zu schaffen, bei der sich der Auflagedruck über das Füllmaterial gleichmäßig auf den Kiefer verteilt, um damit einem allmählichen Schwinden des Kieferknochens vorzubeugen.

Erfindungsgemäß wird diese Aufgabe dadurch gelöst, daß bei einem Verfahren der eingangs definierten Gattung eine dünne, schmiegsame, flüssigkeitsdichte Folie in ihrem Randbereich bzw. im Randbereich der Unterfütterung mit der Prothese flüssigkeitsdicht verbunden wird und daß sodann als Unterfütterung ein zähplastisches bzw. zähflüssiges Kunststoffmaterial in zugebissenem Zustand oder bei auf den Gaumen aufgesetzter Prothese in einer dem Mindermaß der Prothese entsprechenden Menge in den Raum zwischen Folie und Prothese eingespritzt wird.

Die Menge des eingespritzten Materiales läßt sich auf diese einfache Weise sehr exakt der Größe des durch das Mindermaß gewonnenen Raumes entsprechend bemessen. Dadurch ist die dünne Schicht der Unterfütterung befähigt, die Auflagerkräfte der Prothese gleichmäßig auf den Kieferknochen zu übertragen und den Kiefer derart weitgehend zu beanspruchen, daß er nicht allmählich schwindet.

Zufolge der Verwendung eines zähplastischen bzw. zähflüssigen Kunststoffmateriales kann dieses Material beim Kauen an den bevorzugten Auflagestellen der Prothese am Kieferknochen zu den weniger belasteten Bereichen ausweichen und solcherart gewährleisten, daß beim Kauen der Auflagerdruck der Prothese auf den Kieferknochen vergleichmäßigt wird. Weil das zähplastische bzw. zähflüssige Kunststoffmaterial darüber hinaus bei der Druckbelastung keinen weichen, elastischen Körper darstellt, ist der Kieferknochen immer gleichmäßig stark und vergleichsweise hart belastet und beansprucht.

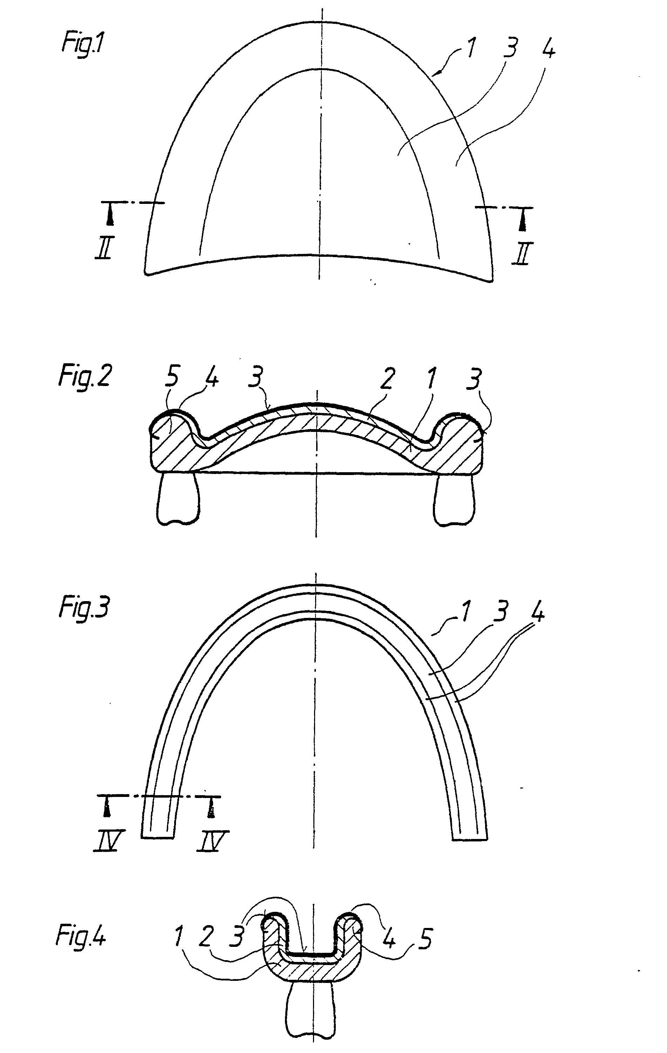

Nachstehend ist die Erfindung unter Bezugnahme auf die Zeichnungen beispielsweise beschrieben. Es zeigt Fig. 1 eine Oberkieferprothese in einer Draufsicht, Fig. 2 einen zugehörigen Querschnitt, Fig. 3 eine Unterkieferprothese in Draufsicht (ohne Zähne) und Fig. 4 einen Querschnitt nach der Linie IV-IV der Fig. 3.

Die Prothese 1 selbst ist nach einer Abformung des Gaumens, an dessen Schleimhaut sie haften soll, im üblichen Verfahren aus einem geeigneten harten Kunststoff, wie Methylacrylat, hergestellt, weist jedoch in dem dem Gaumen zuzuwendenden Bereich zunächst im Vergleich zur Abformung des Gaumens ein Mindermaß auf.

Der durch dieses Mindermaß geschaffene Raum ist zur Unterbringung eines von einer Folie 3 abgedeckten, zähplastischen bzw. zähflüssigen Kunststoffmateriales 2 bestimmt. Dieses Mindermaß kann dadurch erreicht werden, daß die Prothese 1 nach ihrer Fertigstellung abgeschliffen oder abgefräst wird oder man kann schon bei der Formung der Prothese selbst dafür sorgen, daß dieses Mindermaß zustandekommt, beispielsweise durch Auflegen einer das Gipsmodell temporär bedeckenden Auflage bei der Herstellung der Prothese.

Die Folie 3 besteht aus einem verformbaren, flüssigkeitsdichten, schmiegsamen und zähen Material, wie beispielsweise Silikonkautschuk oder Polyurethan. Das zähplastische bzw. zähflüssige Kunststoffmaterial kann z. B. aus Polyisobutylen in honigartiger Konsistenz bestehen.

Die Folie 3 ist an der Prothese 1 dadurch festgehalten, daß der Folienrand 4 in das Material der Prothese 1 eingezogen (eingebettet) und dadurch flüssigkeitsdicht mit deren Material verbunden ist.

Dieser Rand 4 könnte innen- oder außenseitig am Prothesenwulst eingegossen sein, vorteilhafterweise verläuft dieser Rand 4 der Folie 3 an der Prothesenaußenseite unterhalb des den Prothesenrand verkörpernden üblichen Wulstes 5, so daß die Umschlagfalte der Prothese 1 gemeinsam mit dem Kiefer gewissermaßen ein Ventil bildet, das das Entweichen von Luft aus dem Raum zwischen der Prothese 1 und dem Gaumen bzw. dem Kiefer ermöglicht. Die Ventilfunktion wird durch das Verdrängen des zähflüssigen Materiales verstärkt, weil sich dieses Material bei einer Belastung der Prothese 1 gegen den Rand der Folie 3 preßt.

Für das Einspritzen des zähplastischen bzw. zähflüssigen Materiales in den zwischen Folie 3 und Prothese 1 gebildeten Hohlraum kann im Rand 4, und zwar vorzugsweise im labialen bzw. buccalen Bereich der Prothese 1 ein Kanal vorgesehen sein, über den mittels einer Injektionsspritze dieses zähplastische bzw. zähflüssige Material 2 im zugebissenen Zustand oder bei auf den Gaumen aufgesetzter Prothese 1 eingespritzt wird. Die im Inneren dieses Hohlraumes befindliche Luft kann z. B. über einen in dem dem Einspritzkanal gegenüberliegenden Bereich des Randes 4 vorgesehenen Kanal abgesaugt werden. Diese Kanäle werden nach dem Einspritzen des zähplastischen bzw. zähflüssigen Materiales wieder verschlossen, was in besonders einfacher Weise dann geschehen kann, wenn die Folie 3 an der Prothesenaußenseite an einem den Prothesenrand verkörpernden Wulst 5 befestigt ist.

Bei einer solchen erfindungsgemäß geschaffenen Prothese wird sich — wie bereits eingangs erwähnt — der Kieferkammknochen (Alveolarfortsatz) bei einer Belastung der Prothese stets gegen die harte Prothese durchdrücken und somit wird die Prothese auf diesem Kieferkammknochen satt zur Auflage kommen. Die sich wiederholende Beanspruchung des Kieferkammknochens wird dessen Schwinden wirksam verhindern, denn dieses Problem des Schwindens tritt bekanntlich vorwiegend durch die Anwendung vergleichsweise weicher Unterfütterungen harter Prothesen auf.

Weiters wird erreicht, daß der Spalt zwischen dem Kiefer und der dem Kiefer zugewandten Seite der Prothese in allen Bereichen sehr dünn ist, weil sich die zähflüssige Schicht dem Kiefer weitgehend anzupassen vermag. Daraus ergibt sich eine optimale Haftung der Prothese an der Schleimhaut des Kiefers.

Darüber hinaus vermag aber das zähplastische bzw. zähflüssige Material auch Spitzenbelastungen besser aufzunehmen und zu mildern, es sorgt für eine bessere Kräfteverteilung, beugt damit dem Auftreten schmerzhafter Druckstellen vor und verbürgt somit eine Verbesserung der Kaufähigkeit des Prothesenträgers.

**Patentanspruch**

Verfahren zur Herstellung einer schleimhautgetragenen, nach einer Abformung von Kieferteilen angefertigten Zahnprothese (1) mit verbessertem Paßsitz, wobei der dem Kiefer zugewandte Bereich der Prothese mit einem der Dicke einer Unterfütterung (2) aus verformbarem Kunststoffmaterial entsprechenden Mindermaß gegenüber den zugehörigen abgeformten Kieferabmessungen angefertigt wird, welches Mindermaß z. B. bei der Herstellung der Prothese durch bereichsweises Auflegen einer das Gipsmodell temporär bedeckenden Auflage hergestellt wird, dadurch gekennzeichnet, daß eine dünne, schmiegsame, flüssigkeitsdichte Folie (3) in ihrem Randbereich (4) bzw. im Randbereich der Unterfütterung mit der Prothese (1) flüssigkeitsdicht verbunden wird und sodann als Unterfütterung (2) ein zähplastisches bzw. zähflüssiges Kunststoffmaterial in zugebissenem Zustand oder bei auf den Gaumen aufgesetzter Prothese (1) in einer dem Mindermaß der Prothese (1) entsprechenden Menge in den Raum zwischen Folie (3) und Prothese (1) eingespritzt wird.

**Claim**

Process for producing a dental prosthesis (1) with improved matching, borne by the mucous membrane and made by casting jaw parts, the region of the prosthesis facing the jaw being made of a reduced dimension, corresponding to the thickness of a lining (2) of deformable plastics material, with respect to the associated cast jaw dimensions, this reduced dimension being produced, for example, when producing the prosthesis by applying a layer temporarily covering the plaster model in certain regions, characterized in that a thin, flexible, liquid-tight film (3) is connected to the prosthesis (1) in liquid-tight manner in the edge region (4) of the film or in the edge region of the lining, and then a visco-plastic or viscous plastics material is injected as a lining (2) into the space between the film (3) and the prosthesis (1) in a quantity corresponding to the reduced dimension of the prosthesis (1), the jaw being in the closed position or the prosthesis (1) being set on the palate.

**Revendication**

Procédé de fabrication d'une prothèse dentaire (1) à surface d'appui améliorée, prenant appui sur la muqueuse, confectionnée après moulage de parties de la mâchoire, la partie de la prothèse voisine de la mâchoire étant confectionnée avec des dimensions inférieures aux dimensions du moulage de la mâchoire en question, la différence de dimensions correspondant à l'épaisseur d'une fourrure (2) en matière plastique déformable et cette moins-value étant réalisée par exemple lors de la confection de la prothèse en posant par zones un revêtement recouvrant temporairement la maquette en plâtre, caractérisé en ce qu'une feuille (3) mince, souple, étanche aux liquides, est, dans sa zone marginale (4) et dans la zone marginale de la fourrure, reliée de façon étanche aux liquides à la prothèse (1) et que, comme fourrure, une matière plastique visqueuse ou plastique est ensuite injectée dans l'espace entre la feuille (3) et la prothèse (1) en quantité correspondant à la moins-value de la prothèse (1), les mâchoires étant serrées fortement ou la prothèse (1) étant posée sur le palais.

EP 0 214 950 B1

Fig.1

Fig.2

Fig.3

Fig.4